# EUROPÄISCHE PATENTSCHRIFT

(11) **EP 0 836 671 B1**
(45) Veröffentlichungstag und Bekanntmachung des Hinweises auf die Patenterteilung: **10.02.1999**
(21) Anmeldenummer: 96925653.6
(22) Anmeldetag: 03.07.1996
(51) Int. Cl.: F01C 21/00, B66D 5/26

(54) **LAMELLENLÄUFER MIT BREMSE**
VANE MOTOR WITH BRAKE
ROTOR A LAMELLES POURVU D'UN FREIN

(30) Priorität: 04.07.1995 DE 29510799 U
(43) Veröffentlichungstag der Anmeldung: 22.04.1998
(73) Patentinhaber: J.D. Neuhaus Hebezeuge GmbH & Co., D-58455 Witten (DE)
(72) Erfinder: Peters, Dieter, D-58453 Witten (DE); Krebs, Peter, D-58455 Witten (DE)
(74) Vertreter: Patentanwälte Wenzel & Kalkoff
(86) Internationale Anmeldenummer: EP9602917
(87) Internationale Veröffentlichungsnummer: WO9702406

(56) Entgegenhaltungen:
- WO-A-95/02762
- DE-A- 2 637 321
- US-A- 3 848 716
- US-A- 3 883 119
- US-A- 4 434 974

## Beschreibung

Die Erfindung betrifft einen Lamellenmotor, bestehend aus einem Gehäuse und einem in dem Gehäuse gelagerten Lamellenläufer mit einer in dem Gehäuse angeordneten und mindestens ein Federelement umfassenden Reib-Bremseinrichtung zum Abbremsen, Stillsetzen und Lösen des Lamellenläufers.

Derartige Lamellenmotoren sind seit langem bekannt und werden vorzugsweise mit Druckluft, aber auch mit Hydraulikfküssigkeit betrieben. Sie finden z.B. Einsatz in Hebezeugen. Sie haben sich im Alltagsbetrieb als zuverlässig und robust erwiesen. Beispielsweise im Bergbau wird ihr Einsatz gegenüber Elektromotoren bevorzugt, da keine gesonderten Maßnahmen zum Explosionsschutz getroffen werden müssen.

Im allgemeinen besteht der Lamellenmotor aus einem Gehäuse und einem in dem Gehäuse gelagerten Lamellenläufer. Der Lamellenläufer wiederum umfaßt neben einer Welle einen Rotor mit Rotorschlitzen, in denen einzelne Lamellen radial verschieblich zur Rotorachse des Lamellenläufers gelagert sind. Der Lamellenläufer selbst ist im Lamellenmotor in einer Zylinderbuchse angeordnet, wobei die Drehachse des Lamellenläufers exzentrisch zur Längsmittelachse der Zylinderbuchse angeordnet und in seitlichen Seitenscheiben gelagert ist. Im laufenden Betrieb sorgt die auf die Lamellen wirkende Zentrifugalkraft eventuell unterstützt durch Federelemente dafür, daß jede Lamelle an der Innenwand der Zylinderbuchse anliegt, so daß nur minimale Leckageverluste zwischen den schmalen Laufflächen der Lamellen und der Innenwand der Zylinderbuchse auftreten. Weitere Leckageverluste entstehen durch Spalte an den Seitenflächen des Lamellenläufers und zwischen dem Außendurchmesser des Lamellenläufers und dem Innendurchmesser der Zylinderbuchse.

Ferner weist der Lamellenmotor in seinem Gehäuse integriert eine Reib-Bremseinrichtung auf, die zum Abbremsen, Stillsetzen und Lösen des Lamellenläufers vorgesehen ist. Diese Reib-Bremseinrichtung besteht beispielsweise aus einer Bremsscheibe mit mindestens einem gegen die Stirnflächen der Bremsscheibe verschiebbaren Bremsbacken, wobei die Bremsscheibe mit dem Bremsbacken und einem dem Bremsbacken zugeordneten Zylinder in einem gesonderten Raum des Gehäuses angeordnet und die Bremsscheibe auf einem Verlängerungszapfen der Rotorwelle gelagert ist.

Der Bremsbacken selbst ist federbelastet und so ausgelegt, daß er sich sowohl im Stillstand als auch in der Anlaufphase des Lamellenmotors mehr oder weniger mit der Bremsscheibe im Reibschluß befindet. Zur Steuerung der Bremswirkung der Reib-Bremseinrichtung ist parallel zu einem Zufuhrkanal zum Lamellenläufer für das Druckmedium eine weitere Leitung vorgesehen, die in dem Raum endet, in dem der Bremszylinder zum Lüften der Reib-Bremseinrichtung angeordnet ist. Durch die Wirkung des dem Lamellenläufer zugeführten Druckmediums, das über die zusätzliche Leitung in den genannten Bremszylinder gelangt, wird der Bremsbacken gegen die Federkraft in Axialrichtung verschoben, so daß die Bremsscheibe und somit auch der Lamellenläufer - je nach Betriebszustand - mindestens teilweise freigegeben wird. Bei nachlassender Wirkung des Druckmediums kommt der Bremsbacken mit der Bremsscheibe unter Bildung einer entsprechenden Bremswirkung wieder in Kontakt, da sich auch der Druck in dem genannten Raum verringert.

Es ist erforderlich, aufgrund der komplizierten und vielfältigen Bauteile und des Zusammenspiels zwischen dem Lamellenläufer und der Reib-Bremseinrichtung die einzelnen Bauelemente sehr präzise zu fertigen. Die Herstellungs- und Montagekosten der bekannten Lamellenmotoren sind daher relativ hoch.

Aufgrund der neben dem Lamellenläufer in einer separaten Gehäusekammer angeordneten Reib-Bremseinrichtung ist der Lamellenmotor selbst sehr groß bemessen und, da meist ein Gußgehäuse verwendet wird, auch relativ schwer. Die beiden letztgenannten Kriterien erschweren die Handhabung von Ketzenzügen in bestimmten Anwendungsbereichen.

Aus der WO 95/02762 ist ein hydraulischer Lamellenmotor bekannt, bei dem der Läufer axial verschiebbar ist. Auf einer Seite des Läufers ist in die Läuferwelle ein konischer Abschnitt eingefügt, der mit der Gehäusewand einen Bremsraum sowie eine Reibpaarung bildet. Bei drucklosem Motor wird der konische Abschnitt durch eine auf der anderen Seite des Läufers am Ende der elle angeordnete Feder so gegen die Gehäusewand gedrückt, daß der Motor festgesetzt ist. Im Betrieb des Motors wird Hydrauliköl unter Druck durch Bypassleitungen aus dem Motorraum in den Bremsraum geleitet, so daß sich der Läufer und das konische Bauelement axial gegen den Federdruck verschieben und ein Spalt zwischen dem konischen Abschnitt und der Gehäusewand entsteht, so daß die Bremse gelöst ist. Auch bei dieser Anordnung werden gesonderte Bauelemente zum Bilden einer Reib-Bremspaarung eingesetzt. Der Läufer und die Bremseinrichtung sind in zwei voneinander abgedichteten Kammern angeordnet, wobei zusätzliche Ventile in jeder der Bypassleitungen eingesetzt werden, um Leckverluste zu verhindern.

Es besteht daher die Aufgabe, einen Lamellenmotor zu schaffen, der deutlich weniger Bauelemente als der bekannte Stand der Technik umfaßt, um so eine kostengünstigere Herstellung eines solchen Lamellenmotors zu gewährleisten. Außerdem wird eine Reduzierung der Baugröße und des Gewichts angestrebt.

Das Lösungsprinzip der gestellten Aufgabe besteht darin, bereits im Lamellenmotor vorhandenen Bauelementen zusätzliche Funktionen zu übertragen, um dadurch auf andere Bauelemente verzichten zu können. Hierzu ist vorgesehen, daß die üblicherweise unmittelbar neben dem Lamellenläufer angeordneten Seitenscheiben die Bremsfunktion übernehmen. Anstelle der bisherigen Reib-Bremseinrichtung in einem gesonderten Raum ist nun unmittelbar neben dem Lamellenläufer eine Reib-Bremseinrichtung anzuordnen, die sowohl im Stillstand als auch in der Anlaufphase des Lamellenmotors mit mindestens einer der beiden Stirnseiten des Lamellenläufers in Reibschluß steht.

Die Lösung der Aufgabe ist dadurch gekennzeichnet, daß mindestens eine (erste) der beiden Stirnseiten des Lamellenläufers ein Teil der Reib-Bremseinrichtung ist und mit einer Bremsfläche eines Bremselements eine Reibpaarung bildet, das unmittelbar neben dieser ersten Stirnseite angeordnet ist, zum Betätigen der Reib-Bremseinrichtung zum Abbremsen bzw. Stillsetzen und Lösen des Lamellenläufers axial bewegbar ist und auf das die Federelemente wirken.

Durch die Erfindung vereinfacht sich der Aufbau des Lamellenmotors erheblich. Gewicht und Raumbedarf lassen sich deutlich reduzieren. Herstellung und Montage werden leichter und einfacher. Die Herstellkosten werden erheblich reduziert.

Ein weiterer Vorteil besteht darin, daß grobe Fertigungstoleranzen ausreichen. Da es sich bei dem erfindungsgemäßen Lamellenmotor um ein "schwimmendes" System handelt, reguliert sich die axiale Lage des Lamellenläufers von selbst und gleicht somit die Fertigungstoleranzen selbstätig aus. Eventuelle Verschleißerscheinungen, die aufgrund der Rotation in Lagern oder sonstigen Bauteilen auftreten, werden dadurch zum Teil unerheblich.

Vorteilhaft ist weiterhin, daß sich der Lamellenmotor von einer Seite aus zusammenbauen läßt, da die separate Gehäusekammer für die Bremseinrichtung entfällt.

Wenn nur eine Stirnseite des Lamellenläufers ein Bestandteil der Bremseinrichtung ist, indem nämlich eine Stirnseite des Lamellenläufers mit der Bremsfläche des axial verschiebbaren Bremselementes eine Reibpaarung bildet, kann neben der anderen Seite des Lamellenläufers ein gehäusefestes Anschlagelement zur Bildung einer Gleitpaarung mit der anderen (zweiten) Stirnseite vorgesehen sein, das eine dieser Stirnseite zugewandte Gleitfläche aufweist. Das Abbremsen des Lamellenläufers wird hierbei folglich nur auf einer Seite bewirkt, während die zweite Stirnseite mit dem Anschlagelement ein Gleitlager zur Aufnahme insbesondere axialer Kräfte bildet.

Anstelle der einseitig wirkenden Bremseinrichtung wird erfindungsgemäß jedoch bevorzugt, daß der Lamellenläufer axial verschiebbar ist und neben der anderen (zweiten) Stirnseite des Lamellenläufers ein bremsscheibenartig und ortsfest ausgebildetes Anschlagelement vorgesehen ist, das mit der anderen Stirnseite eine zweite Reibpaarung bildet. In diesem Fall sind beide Stirnseiten des Lamellenläufers in die Bremseinrichtung einbezogen, so daß sich eine entsprechend erhöhte sowie gleichmäßige Bremswirkung ergibt.

Das Bremselement wird vorzugsweise durch die Wirkung einer Bremskraft an die Bremsfläche der ersten Stirnseite des Lamellenläufers angedrückt, so daß, wenn auch die andere Stirnseite des Lamellenläufers als Teil der Bremseinrichtung ausgebildet ist, sich eine entsprechende Wirkung der Bremskraft aufgrund der axialen Verschiebbarkeit des Lamellenläufers auch auf der anderen Seite des Lamellenläufers ergibt.

Insbesondere für den Fall, daß beide Stirnseiten des Lamellenläufers als Teile der Bremseinrichtung vorgesehen sind, wird nach einer erfindungsgemäßen Weiterbildung die Konstruktion und Anordnung des Lamellenläufers derart vorgenommen, daß sich das axial verschiebbare Bremselement mindestens teilweise während des Anlaufvorganges des Lamellenmotors durch die Wirkung des dem Lamellenläufer zugeführten Druckmediums von der ersten Stirnseite löst, so daß sich ein Spalt zwischen dem Bremselement und der ersten Stirnseite bildet und die Bremseinrichtung den Lamellenläufer so mindestens teilweise freigibt. Bei nachlassender Wirkung des Druckmediums wird das Bremselement wieder mit der Bremsfläche der ersten Stirnseite in Kontakt gebracht. Die Spaltbreite hängt von dem auf das Bremselement einwirkenden Druck des Antriebsmediums ab. Beim Anlauf des Lamellenläufers bildet sich folglich zunächst nur ein relativ schmaler Spalt - das Bremselement beginnt sich von der Stirnfläche zu lösen, je nach Aufbau des Lamellenmotors löst sich die andere Stirnseite des Lamellenmotors entsprechend von der Bremsfläche des Anschlagelements -, bis der Spalt unter der Wirkung des vollen Betriebsdrucks des Antriebsmediums seine Betriebsbreite erreicht und die beiden Stirnseiten des Lamellenläufers freilaufen. Umgekehrt reduziert sich der Spalt auf beiden Seiten des Lamellenläufers wieder bis zum Stillstand des letzteren, wenn der Druck des Antriebsmediums entsprechend abnimmt.

Falls neben jeder der beiden Stirnflächen des Lamellenläufers eine gesonderte Bremseinrichtung vorgesehen ist, wird das entsprechende weitere Bremselement auf der anderen Seite des Lamellenläufers zur Spaltbildung entsprechend und ebenfalls unter der Wirkung des Drucks des Antriebsmediums axial verschoben.

Die Bremselemente sind vorzugsweise durch die Wirkung einer Bremskraft an die Bremsfläche der ersten Stirnseite des Lamellenläufers bzw. im Falle einer zweiten Bremseinrichtung an die Bremsflächen der beiden Stirnseiten des Lamellenläufers andrückbar, wobei die Bremskraft zweckmäßig mechanisch mittels Federelementen erzeugt wird.

Vorzugsweise bestehen die Bremselemente ebenso wie das Anschlagelement aus Bremsbelagmaterial. Alternativ hierzu ist auch Sintermaterial denkbar.

Damit der Druckraum des Lamellenläufers nach wie vor fluidmäßig gegenüber seiner Umgebung abgedichtet bleibt, ist als erfindungsgemäße Weiterbildung vorgesehen, daß sowohl für das Bremselement der Bremseinrichtungen als auch für das Anschlagelement auf ihrem Umfang angeordnete Ringdichtungen vorgesehen sind.

Eine sehr wesentliche Weiterbildung der Erfindung besteht darin, daß ein Kolbenring, der in dem Bremselement angeordnet ist, und zwar auf der der entsprechenden Stirnseite des Lamellenläufers abgewandten Seite, sowohl mit Stellschrauben als auch mit den die Bremskraft bewirkenden Federelementen in Verbindung steht, wobei mittels der Stellschrauben eine Veränderung der Federkraft der Federelemente bewirkt wird. Die Stellschrauben gestatten ein Einstellen und ebenso auch ein Nachstellen der Bremskraft in sehr einfacher Weise, ohne daß das Gehäuse hierfür geöffnet werden muß.

Eine besonders wesentliche Weiterbildung der Erfindung besteht darin, daß mindestens eines der zwei Lager des Lamellenläufers unmittelbar in dem Bremselement angeordnet ist und deshalb entgegen der bisherigen Bauart an den Axialverschiebungen, die sich im Betrieb des Lamellenmotors ergeben, gemeinsam mit dem Bremselement teilnimmt.

Eine weitere vorteilhafte Ausgestaltung besteht darin, daß das Gehäuse des Lamellenmotors keine separate Zylinderbuchse zur Ummantelung des Lamellenläufers aufweist, sondern Zylinderbuchse und Gehäuse des Lamellenmotors ein einstückiges Teil bilden. Hierdurch werden die Herstellungskosten eines solchen Lamellenläufers weiter reduziert, zumal Fertigungstoleranzen der Innenfläche der Zylinderbuchse aufgrund der radial verschiebbaren Lamellen zum großen Teil ausgeglichen werden.

Bei einem weiteren Ausführungsbeispiel eines Lamellenmotors ist vorteilhafterweise in das Gehäuse des Lamellenmotors ein Teil eines Getriebegehäuses, das vorzugsweise für einen Kettentrieb vorgesehen ist, integriert. Dabei bilden das Gehäuse für den Kettentrieb und das Gehäuse für den Lamellenmotor ein einstückiges Teil und ergeben somit eine kompakte Bauweise.

Bei einem weiteren Ausführungsbeispiel ist das Gehäuse des Lamellenmotors vollständig mit dem des Kettentriebs verbunden, wobei Aufnahmen für Lasthaken und Kettennuß in dem Gehäuse für den Kettentrieb vorgesehen sind.

Weitere vorteilhafte Ausgestaltungen sind der nachfolgenden Beschreibung und den Unteransprüchen zu entnehmen.

Nachfolgend werden mehrere Ausführungsbeispiele der Erfindung, die in den Zeichnungen dargestellt sind, näher erläutert; es zeigen:
- Fig. 1: ein Anwendungsbeispiel eines Lamellenmotors für ein Hebezeug, angeordnet an einer Laufkatze, in Seitenansicht;
- Fig. 2: eine Rückansicht der Laufkatze von Fig. 1;
- Fig. 3.: eine Schnittansicht eines ersten Ausführungsbeispiels eines Lamellenmotors mit Zylinderbuchse;
- Fig. 4: eine Schnittansicht eines zweiten Ausführungsbeispiels eines Lamellenmotors, wobei die Zylinderbuchse Bestandteil des Gehäuses ist;
- Fig. 5: eine Schnittansicht eines dritten Ausführungsbeispiels eines Lamellenmotors in Verbindung mit einem alternativen Vorsatzgetriebe (strichpunktiert dargestellt);
- Fig. 6: eine Schnittansicht eines vierten Ausführungsbeispiels eines Lamellenmotors mit einem Teil eines Gehäuses für einen Kettentrieb;
- Fig. 7: eine Schnittdarstellung eines fünften Ausführungsbeispiels eines Lamellenmotors, gegenüber Fig. 5 mit einem vollständigen Gehäuse für einen Kettentrieb und die Lasthakenaufnahme;
- Fig. 8: eine Querschnittsansicht des Lamellenmotors gemäß Fig. 3.

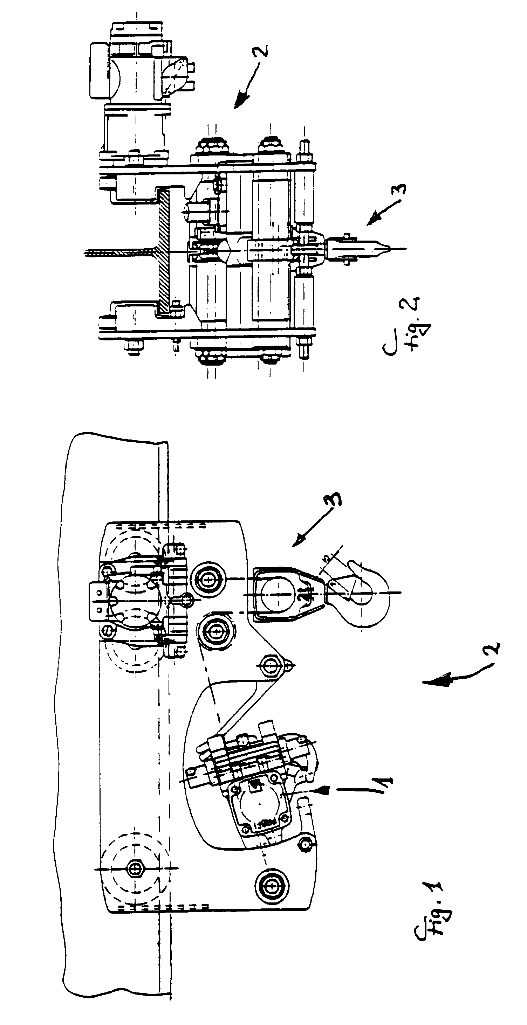

In den Fig. 1 und 2 ist eine Anwendung eines erfindungsgemäßen Lamellenmotors 1 gezeigt. Der Lamellenmotor 1 ist in eine verfahrbare Laufkatze 2 eingebaut, wobei der Lamellenmotor 1 einer Hebe- bzw. Senkeinrichtung 3 als Antrieb zugeordnet ist. Der Lamellenmotor 1 und die Hebe- und Senkeinrichtung 3 stehen über einen Kettentrieb in Verbindung. Es ist jedoch auch möglich, daß derselbe Lamellenmotor auch für den Fahrantrieb der Laufkatze 2 verwendet wird.

Der Lamellenmotor 1 (Fig. 3 bis 8) besteht im wesentlichen aus einem Gehäuse 4, einem in dem Gehäuse 4 angeordneten Lamellenläufer 5 und einer Bremseinrichtung 10.

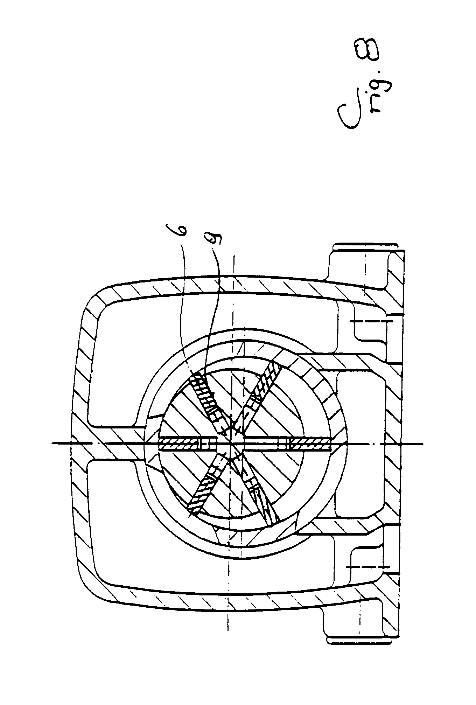

Das Gehäuse 4 selbst besteht vorzugsweise aus Grauguß, wobei im Inneren des Gehäuses 4 eine Zylinderbuchse 22' aus einem anderen Material eingearbeitet ist (Fig. 3, 8). Vorzugsweise ist das Gehäuse 4 so gestaltet, daß die Zylinderbuchse 22 und das Gehäuse 4 ein einstückiges Teil bilden und somit in einem Herstellungsschritt gefertigt werden können (Fig. 4 bis 7)

Der Lamellenläufer 5 umfaßt einen Rotor und zu beiden Seiten des Rotors abstehende Lagerzapfen 11, 13. An einem Lagerzapfen 13 ist zusätzlich ein Antriebsritzel bzw. eine Kupplungsverzahnung 8 vorgesehen. Beide Lagerzapfen 11, 13 bilden die Welle 29 des Lamellenläufers 5, die im montierten Zustand exzentrisch zur Rotationsachse der Zylinderbuchse 22, 22' angeordnet ist.

Der Rotor des Lamellenläufers 5 weist Rotorschlitze 9 auf, in denen die Lamellen 6 radial verschieblich und federnd gelagert sind.

Das Gehäuse 4 des Lamellenmotors 1 ist so gestaltet, daß alle für den Lamellenläufer 5 notwendigen Bauteile von einer Seite aus in das Innere des Gehäuses 4 eingesetzt werden können. Auf der Antriebsseite des Lamellenmotors 1 ist zunächst ein Lager 15 für den weiteren Lagerzapfen 13 mit seinem Antriebsritzel 8 in das Gehäuse einzubringen und ein Anschlagelement 12, das aus Bremsmaterial besteht, einzusetzen. Das Anschlagelement 12 weist auf seinem Umfang eine Ringdichtung 17 auf, die das Innere des Lamellenläufers 5 gegenüber seiner Umgebung abdichtet. Für ein einfaches und positionsgenaues Einfügen des Anschlagelements 12 ist ein Zapfen 21 vorgesehen, der vor dem Einbringen des Anschlagelements 12 in eine Bohrung im Gehäuse eingesteckt wird, so daß mindestens ein Teil des Zapfens 21 übersteht und im montierten Zustand in eine Bohrung in dem Anschlagelement 12 eingreift, um ein Verdrehen des Anschlagelements 12 während der Drehbewegung des Lamellenläufers 5 zu verhindern.

Mit Hilfe einer Einbauvorrichtung, die in der Zeichnung nicht dargestellt ist, wird der Lamellenläufer 5 mit den Lamellen 6, die elastisch gelagert sind, in das Gehäuse 4 eingesetzt und durch das Anschlagelement 12 und das weitere Lager 15 hindurchgeschoben, so daß das Antriebsritzel 8, wie dargestellt, aus dem Gehäuse 4 des Lamellenmotors 1 vorsteht und eine Stirnfläche 26 des Lamellenläufers 5 an der Bremsfläche des Anschlagelements 12 anliegt.

Die Bremseinrichtung 10 umfaßt im wesentlichen ein Bremselement 28 mit einer Bremsfläche 27, ein in dem Bremselement 28 angeordnetes Lager 14 und ein auf das Bremselement 28 unmittelbar wirkendes Federelement 19. Dabei besteht das Bremselement 28 aus Bremsbelagmaterial. Alternativ hierzu ist vorgesehen, daß das Bremsbelagmaterial auf einen Grundkörper, der kostengünstig herstellbar ist, aufbringbar ist. Es ist jedoch auch möglich, daß das Bremselement 28 aus Sintermetall besteht bzw. nur die dem Lamellenläufer zugewandte Seite aus Sintermetall gefertigt ist.

Zur Montage der Bremseinrichtung 10 wird das Bremselement 28 vormontiert, indem in Nuten der Umfangsfläche des Bremselements 28 Ringdichtungen 16 eingesetzt werden. Ferner wird eine Ringdichtung in die Bohrung in dem Bremselement 28 eingesetzt, die zur Aufnahme des Lagerzapfens 11 der Welle 29 des Lamellenläufers 5 vorgesehen ist. Zur Aufnahme des Lagerzapfens 11 ist ein Lager 14 vorgesehen, das in einer Ausnehmung im Bremselement 28 angeordnet ist. Auf die dem Lamellenläufer 5 abgewandte Stirnfläche des Bremselements 28 wirkt das Federelement 19, das vorzugsweise aus Tellerfedern besteht, die an einem Kolbenring 23 anliegen, der mittels Stellschrauben 18 verschiebbar ist, so daß sich die Federkraft des Federelements 19 und damit die Bremskraft einstellen läßt. Um ein Verdrehen des Bremselements 28 im Gehäuse zu verhindern, ist ein in einem Gehäusedeckel 24 angeordneter Zapfen 20 vorgesehen, der im montierten Zustand der Bremseinrichtung 10 in diese eingreift. Dieser Gehäusedeckel 24 ist stirnseitig am Gehäuse 4 angeordnet, schließt das Gehäuseinnere ab und nimmt die eben beschriebenen Stellschrauben 18 auf.

### Funktionsweise:

Im Stillstand des Lamellenmotors 1 befindet sich das Bremselement 28 der Bremseinrichtung 10 mit dem Lamellenläufer 5, wie in den Fig. 3 - 7 dargestellt ist, im Reibschluß und setzt somit den Lamellenläufer 5 fest.

Wenn Druckmedium in den Druckraum des Lamellenläufers 5 strömt, um den Anlauf und die Rotation des Lamellenläufers 5 zu bewirken, entsteht aufgrund des Drucks an den Stirnseiten der jeweils mit Druckmedium gefüllten Lamellenzwischenräume ein Spalt zwischen dem Bremselement 28 und seiner Bremsfläche 27 und der einen Stirnseite 25 des Lamellenläufers durch eine axiale Verschiebung des Bremselementes 28 entgegen der Federkraft des Federelementes 19. Während der Anlaufphase bleibt jedoch die eine Stirnseite 25 des Lamellenläufers teilweise (schleifend) mit dem Bremselement 28 in Kontakt, und die andere Stirnseite 26 des Lamellenläufers 5 bildet gleichfalls weiterhin eine Reibpaarung mit dem Anschlagelement 12.

Erhöht sich der Betriebsdruck zwischen den Lamellen des Lamellenläufers 5 weiter, so wird der Spalt zwischen dem Bremselement 28 und der einen Stirnseite 25 des Lamellenläufers 5 - ebenso wie der Spalt auf der anderen Seite - größer, bis sich das Bremselement 28 und auch das Anschlagelement 12 nicht mehr mit dem Lamellenläufer 5 in Reibschluß befindet. Der Lamellenläufer 5 rotiert nun "axial schwimmend" zwischen den Bremsflächen des Anschlagelementes 12 und dem Bremselement 28.

Läßt der Druck des Druckmediums wieder nach, nimmt die Spaltbreite entsprechend ab, und es kommt wieder zu einer Berührung zwischen dem Bremselement 28 und der einen Stirnfläche 25 des Lamellenläufers 5 auf der einen Seite sowie zwischen der anderen Stirnfläche 26 und der Bremsfläche des Anschlagelementes 12 auf der anderen Seite des Lamellenläufers 5.

Durch Einstellung des Federelements 19, das auf das Bremselement 28 wirkt, läßt sich die Bremskraft, die auf den Lamellenläufer 5 ausgeübt wird, so einstellen, daß der Lamellenläufer 5 unter allen Umständen sicher festsetzbar ist und gleichzeitig ein ungehinderter Anlauf und Betrieb des Lamellenmotors möglich ist.

Es ist möglich, daß eine weitere Bremseinrichtung der in Fig. 3 - 8 dargestellten Art auf der anderen Stirnseite 26 des Lamellenläufers 5 angeordnet ist, so daß sich an beiden Seiten des Lamellenläufers 5 eine unmittelbare Bremsöffnungsbewegung einstellt.

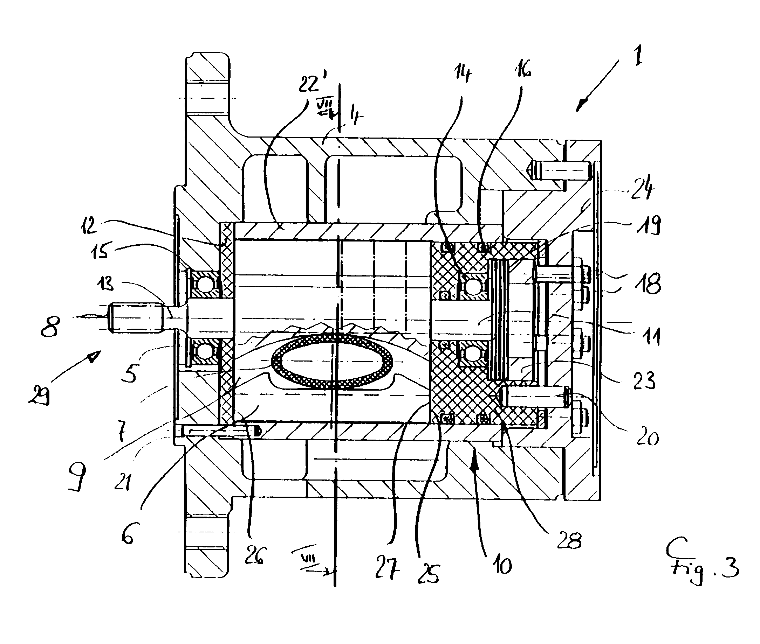

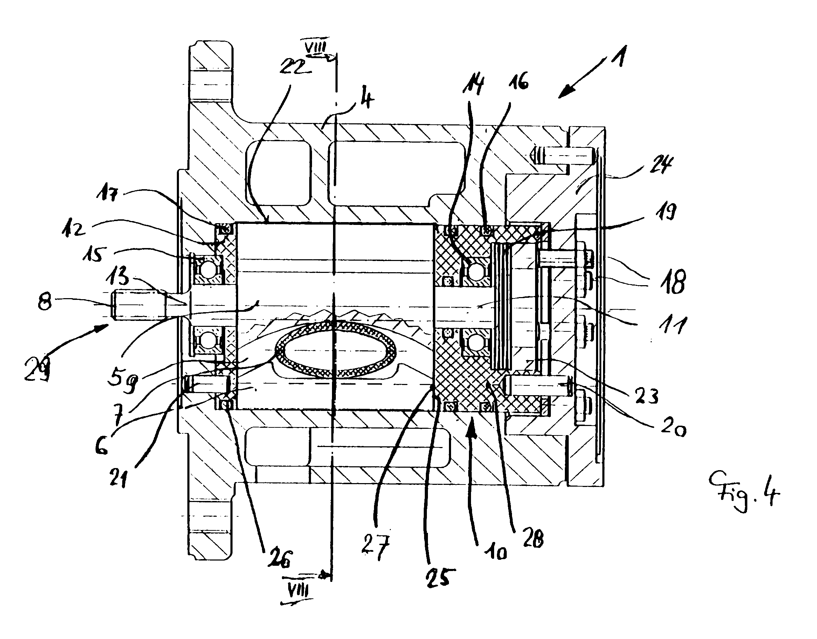

Bei dem in Fig. 5 dargestellten Ausführungsbeispiel ist an dem Lamellenmotor auf der Antriebsseite ein alternatives Vorsatzgetriebe (strichpunktiert dargestellt) vorgesehen, das unmittelbar an das Gehäuse 4 angeflanscht werden kann.

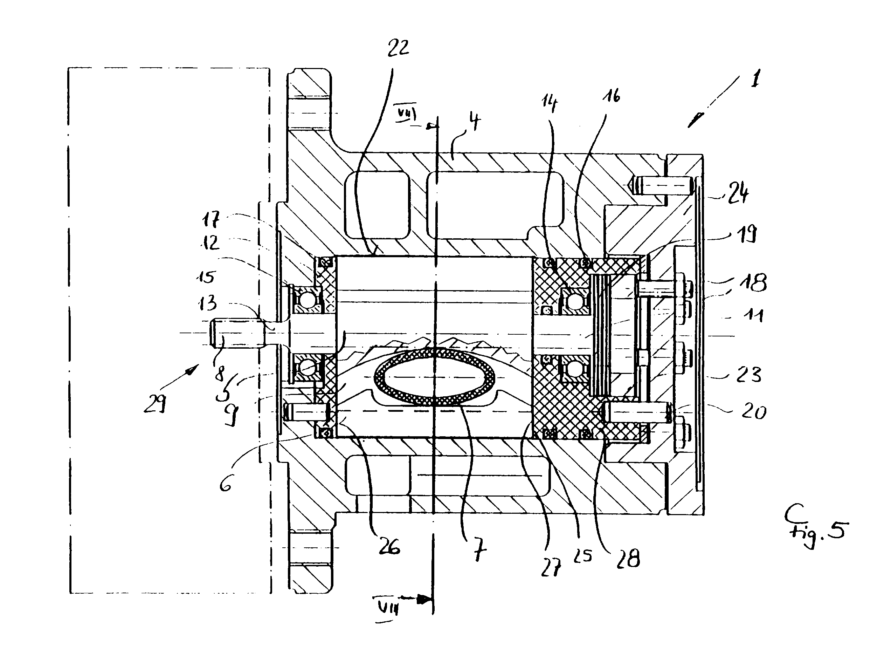

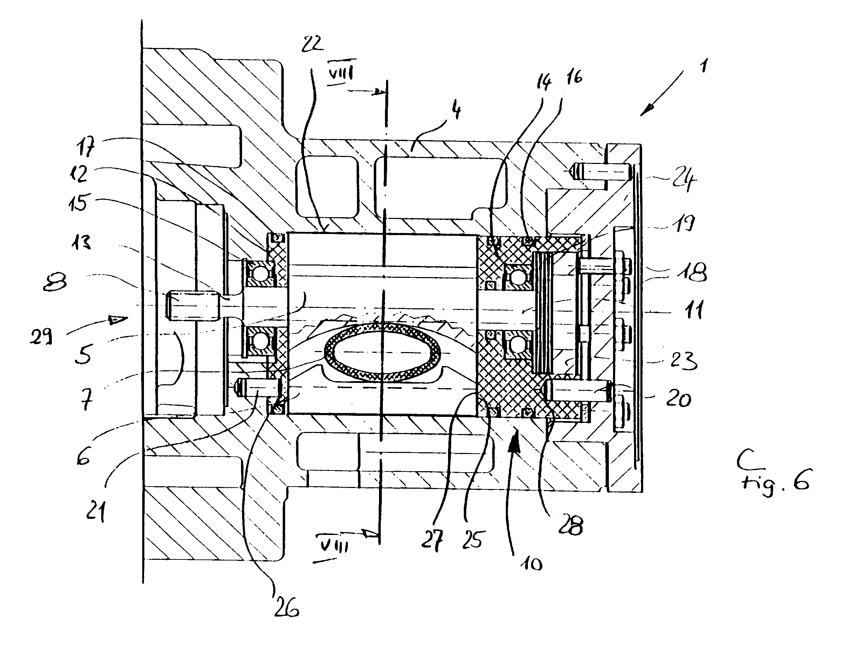

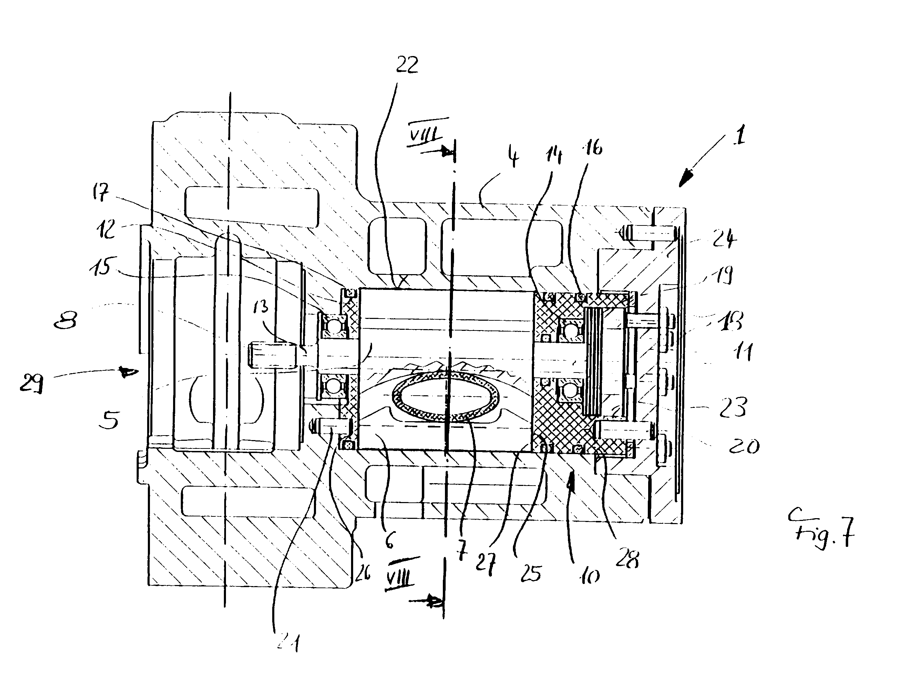

In den Ausführungsbeispielen gemäß Fig. 6 und 7 ist ein Teilgehäuse bzw. ein vollständiges Gehäuse für einen Kettentrieb vorgesehen, das mit dem Gehäuse 4 des Lamellenmotors 1 einstückig als kompakte Einheit ausgebildet ist.

Da der erfindungsgemäße Lamellenmotor einfach aufgebaut und daher kostengünstig herstellbar ist, ist damit ein vielseitig einsetzbarer Motor geschaffen worden, zumal sich das erfindungsgemäße Lösungsprinzip ohne weiteres auf pneumatische bzw. hydraulische Lamellenmotoren und ebenso auf Zahnradmotoren übertragen läßt. Wesentlich ist dabei, daß sich die Drehzahl des Lamellenläufers durch die gleichzeitige und unmittelbare Druckmittelbeaufschlagung des Lamellenläufers und des Bremselementes auch unter Last in kleinen Schritten regeln läßt.

## Patentansprüche

1. Lamellenmotor, bestehend aus einem Gehäuse (4) und einem in dem Gehäuse (4) gelagerten Lamellenläufer (5) mit einer in dem Gehäuse (4) angeordneten und mindestens ein Federelement (19) umfassenden Reib-Bremseinrichtung zum Abbremsen, Stillsetzen und Lösen des Lamellenläufers, (5) dadurch **gekennzeichnet,** daß mindestens eine (erste) der beiden Stirnseiten (25, 26), des Lamellenläufers (5) ein Teil der Bremseinrichtung (10) ist und mit einer Bremsfläche (27) eines Bremselementes (28) eine Reibpaarung bildet, das unmittelbar neben dieser Stirnseite (25 bzw. 26) angeordnet ist, beim Betätigen der Reib-Bremseinrichtung zum Abbremsen, Stillsetzen und Lösen des Lamellenläufers (5) axial bewegbar ist und auf das die Federelemente (19) wirken.

2. Lamellenmotor nach Anspruch 1, dadurch **gekennzeichnet,** daß ein gehäusefestes Anschlagelement (12) zur Bildung einer Gleitpaarung mit der anderen (zweiten) Stirnseite (26) eine der Stirnseite (26) zugewandte Gleitfläche oder ein Axiallager aufweist.

3. Lamellenmotor nach Anspruch 1, dadurch **gekennzeichnet,** daß der Lamellenläufer (5) axial verschiebbar ist und neben der anderen (zweiten) Stirnseite (26) des Lamellenläufers (5) ein bremsscheibenartig und ortsfest ausgebildetes Anschlagelement (12) mit einer Bremsfläche vorgesehen ist, das mit der anderen Stirnseite (26) eine zweite Reibpaarung bildet.

4. Lamellenmotor nach Anspruch 1, 2 oder 3 dadurch **gekennzeichnet,** daß das Bremselement (28) durch die Wirkung einer Bremskraft an die Bremsfläche (27) der ersten Stirnseite (25) des Lamellenläufers (5) andrückbar ist.

5. Lamellenmotor nach einem oder mehreren der Ansprüche 1, 3 oder 4, dadurch **gekennzeichnet,** daß anstelle des Anschlagelementes (12) ein weiteres Bremselement vorgesehen ist, das axial verschiebbar und Bestandteil einer weiteren Bremseinrichtung sowie durch die Wirkung einer Bremskraft an die Bremsfläche der zweiten Stirnseite (26) des Lamellenläufers (5) andrückbar ist.

6. Lamellenmotor nach einem oder mehreren der Ansprüche 1, 3 oder 4, dadurch **gekennzeichnet**, daß sich das Bremselement (28) mindestens teilweise während des Anlaufvorganges des Lamellenmotors (1) durch die Wirkung des dem Lamellenläufer (5) zugeführten Druckmediums von der ersten Stirnseite (25) löst, so daß sich ein Spalt zwischen dem Bremselement (28) und der ersten Stirnseite (25) bildet und die Bremseinrichtung (10) den Lamellenläufer (5) so mindestens teilweise freigibt, und daß das Bremselement (28) bei nachlassender Wirkung des Druckmediums durch die Bremskraft wieder mit der Bremsfläche (27) der ersten Stirnseite (25) in Kontakt gebracht wird.

7. Lamellenmotor nach Anspruch 5 oder 6, dadurch **gekennzeichnet**, daß sich das weitere Bremselement mindestens teilweise während des Anlaufvorganges des Lamellenmotors (1) durch die Wirkung des dem Lamellenläufers (5) zugeführten Druckmediums von der zweiten Stirnseite (26) löst, so daß sich ein Spalt zwischen dem weiteren Bremselement und der zweiten Stirnseite (26) bildet und die weitere Bremseinrichtung den Lamellenläufer (5) so mindestens teilweise freigibt, und daß das weitere Bremselement bei nachlassender Wirkung des Druckmediums durch die Bremskraft wieder mit der Bremsfläche der zweiten Stirnseite (26) in Kontakt gebracht wird.

8. Lamellenmotor nach Anspruch 1, dadurch **gekennzeichnet,** daß das Bremselement (28) der Bremseinrichtung (10) aus Bremsbelagmaterial besteht.

9. Lamellenmotor nach Anspruch 3, dadurch **gekennzeichnet,** daß das Anschlagelement (12) aus Bremsbelagmaterial besteht.

10. Lamellenmotor nach Anspruch 1, dadurch **gekennzeichnet,** daß das Bremselement (28) aus einem Grundkörper und einer Scheibe besteht, wobei die Scheibe auf der dem Lamellenläufer (5) zugewandten Seite am Grundkörper angebracht ist.

11. Lamellenmotor nach Anspruch 10, dadurch **gekennzeichnet,** daß die Scheibe aus Bremsbelagmaterial besteht.

12. Lamellenmotor nach Anspruch 10, dadurch **gekennzeichnet,** daß die Scheibe aus Sintermetall ist.

13. Lamellenmotor nach Anspruch 3, dadurch **gekennzeichnet,** daß das Anschlagelement (12) aus einem Grundkörper und einer Scheibe besteht, wobei die Scheibe auf der dem Lamellenläufer (5) zugewandten Seite am Grundkörper angebracht ist.

14. Lamellenmotor nach Anspruch 13, dadurch **gekennzeichnet,** daß die Scheibe aus Bremsbelagmaterial besteht.

15. Lamellenmotor nach Anspruch 13, dadurch **gekennzeichnet,** daß die Scheibe aus Sintermetall ist.

16. Lamellenmotor nach einem oder mehreren der vorhergehenden Ansprüche, dadurch **gekennzeichnet,** daß ein Kolbenring (23), der im Bremselement 28 angeordnet ist, sowohl mit Stellschrauben (18) oder einer Gewindehülse als auch mit den Federelementen (19) in Verbindung steht, wobei mittels er Stellschrauben oder der Gewindehülse (18) eine Veränderung der Federkraft der Federelemente (19) bewirkt wird.

17. Lamellenmotor nach einem oder mehreren der vorhergehenden Ansprüche, dadurch **gekennzeichnet,** daß der Lamellenläufer (5) in zwei Lagern (14, 15) läuft, wobei ein Lager (14) unmittelbar in dem Bremselement (28) angeordnet ist.

18. Lamellenmotor nach einem oder mehreren der vorhergehenden Ansprüche, dadurch **gekennzeichnet,** daß der Lamellenläufer (5) in zwei Lagern (14, 15) läuft, wobei ein Lager (15) des Lamellenläufers (5) unmittelbar in dem scheibenartig ausgebildeten Anschlagelement (12) oder im Gehäuse (4) oder in dem weiteren Bremselement, falls das Anschlagelement (12) durch ein weiteres Bremselement ersetzt ist, angeordnet ist.

19. Lamellenmotor nach einem oder mehreren der vorhergehenden Ansprüche, dadurch **gekennzeichnet,** daß sowohl für das Bremselement (28) der Bremseinrichtungen (10) als auch für das Anschlagelement (12) auf ihrem Umfang angeordnete Ringdichtungen (16, 17) vorgesehen sind, die den Raum des Lamellenläufers (5) gegenüber seiner Umgebung fluidmäßig abdichten.

20. Lamellenmotor nach einem oder mehreren der vorhergehenden Ansprüche, dadurch **gekennzeichnet,** daß den Lamellenläufer (5) eine Zylinderbuchse (22) umgibt, die mit dem Gehäuse (4) verbunden ist.

21. Lamellenmotor nach einem oder mehreren der vorhergehenden Ansprüche, dadurch **gekennzeichnet**, daß in dem Gehäuse (4) eine zylindrische Bohrung zur Aufnahme des Lamellenläufers (5) ausgebildet ist.

22. Lamellenmotor nach einem oder mehreren der vorhergehenden Ansprüche, dadurch **gekennzeichnet**, daß der Lamellenmotor (1) hydraulisch betreibbar ist.

23. Lamellenmotor nach einem oder mehreren der vorhergehenden Ansprüche, dadurch **gekennzeichnet,** daß der Lamellenmotor (1) pneumatisch betreibbar ist.

24. Lamellenmotor nach einem oder mehreren der vorhergehenden Ansprüche, dadurch **gekennzeichnet,** daß anstelle des Lamellenmotors ein Zahnradmotor vorgesehen ist.

## Claims

1. Vane motor, comprising a casing (4) and a vane rotor (5) mounted in the casing (4), having a friction brake device which is arranged in the casing (4), contains at least one spring element (19) and is intended for braking, stopping and releasing the vane rotor (5), characterized in that at least one (the first) of the two end faces (25, 26) of the vane rotor (5) is part of the brake device (10) and forms a friction pair with a braking surface (27) of a brake element (28), which is arranged directly next to this end face (25 or 26) and is axially movable upon actuation of the fricion brake device for braking, stopping and releasing the vane rotor (5), and on which the spring elements (19) act.

2. Vane motor according to Claim 1, characterized in that a stop element (12) fixed to the casing and intended for forming a sliding pair with the other (the second) end face (26) has a sliding surface, facing the end face (26), or an axial bearing.

3. Vane motor according to Claim 1, characterized in that the vane rotor (5) is axially displaceable, and a stop element (12), which is designed like a brake disk and so as to be in a fixed position and has a braking surface, is provided next to the other (second) end face (26) of the vane rotor (5) and forms a second friction pair with the other end face (26).

4. Vane motor according to Claim 1, 2 or 3, characterized in that the brake element (28) can be pressed by the action of a braking force against the braking surface (27) of the first end face (25) of the vane rotor (5).

5. Vane motor according to one or more of Claims 1, 3 or 4, characterized in that a further brake element is provided instead of the stop element (12), which brake element is axially displaceable and is an integral part of a further brake device and can also be pressed by the action of a braking force against the braking surface of the second end face (26) of the vane rotor (5).

6. Vane motor according to one or more of Claims 1, 3 or 4, characterized in that the brake element (28) is at least partly released from the first end face (25) during the start-up operation of the vane motor (1) by the action of the pressure medium fed to the vane rotor (5), so that a gap forms between the brake element (28) and the first end face (25), and the brake device (10) thus at least partly releases the vane rotor (5), and in that the brake element (28) is brought into contact again with the braking surface (27) of the first end face (25) by the braking force when the action of the pressure medium decreases.

7. Vane motor according to Claim 5 or 6, characterized in that the further brake element is at least partly released from the second end face (26) during the start-up operation of the vane motor (1) by the action of the pressure medium fed to the vane rotor (5), so that a gap forms between the further brake element and the second end face (26), and the further brake device thus at least partly releases the vane rotor (5), and in that the further brake element is brought into contact again with the braking surface of the second end face (26) by the braking force when the action of the pressure medium decreases.

8. Vane motor according to Claim 1, characterized in that the brake element (28) of the brake device (10) is made of brake-lining material.

9. Vane motor according to Claim 3, characterized in that the stop element (12) is made of brake-lining material.

10. Vane motor according to Claim 1, characterized in that the brake element (28) comprises a backing element and a disk, the disk being attached to the backing element on the side facing the vane rotor (5).

11. Vane motor according to Claim 10, characterized in that the disk is made of brake-lining material.

12. Vane motor according to Claim 10, characterized in that the disk is made of sintered metal.

13. Vane motor according to Claim 3, characterized in that the stop element (12) comprises a backing element and a disk, the disk being attached to the backing element on the side facing the vane rotor (5).

14. Vane motor according to Claim 13, characterized in that the disk is made of brake-lining material.

15. Vane motor according to Claim 13, characterized in that the disk is made of sintered metal.

16. Vane motor according to one or more of the preceding claims, characterized in that a piston ring (23), which is arranged in the brake element 28, is connected both to adjusting screws (18) or a threaded sleeve and to the spring elements (19), the spring force of the spring elements (19) being varied by means of the adjusting screws or the threaded sleeve (18).

17. Vane motor according to one or more of the preceding claims, characterized in that the vane rotor (5) runs in two bearings (14, 15), one bearing (14) being arranged directly in the brake element (28).

18. Vane motor according to one or more of the preceding claims, characterized in that the vane rotor (5) runs in two bearings (14, 15), one bearing (15) of the vane rotor (5) being arranged directly in the stop element (12) of disk-like design or in the casing (4) or in the further brake element if the stop element (12) is replaced by a further brake element.

19. Vane motor according to one or more of the preceding claims, characterized in that both the brake element (28) of the brake devices (10) and the stop element (12) are provided with annular seals (16, 17) which are arranged on their circumference and fluidically seal off the space of the vane rotor (5) from its environment.

20. Vane motor according to one or more of the preceding claims, characterized in that a cylinder liner (22) which is connected to the casing (4) surrounds the vane rotor (5).

21. Vane motor according to one or more of the preceding claims, characterized in that a cylindrical bore for accommodating the vane rotor (5) is formed in the casing (4).

22. Vane motor according to one or more of the preceding claims, characterized in that the vane motor (1) can be operated hydraulically.

23. Vane motor according to one or more of the preceding claims, characterized in that the vane motor (1) can be operated pneumatically.

24. Vane motor according to one or more of the preceding claims, characterized in that a gear motor is provided instead of the vane motor.

## Revendications

1. Moteur à piston rotatif à palettes constitué par un bâti (4) et un piston rotatif à palettes (5) positionné dans le bâti (4) avec un dispositif de freinage par friction placé dans le bâti (4) et comprenant au moins un élément à ressort (19) pour freiner, arrêter et desserrer le piston rotatif à palettes (5), **caractérisé en ce** qu'au moins une (première) des deux faces frontales (25, 26) du piston rotatif à palettes (5) est une partie du dispositif de freinage (10) et forme ,avec une surface de freinage (27) d'un élément de freinage (28), un couple frottant qui est placé directement à côté de cette face frontale (25 ou 26), qui est mobile axialement lors de l'actionnement du dispositif de freinage par friction pour freiner, arrêter et desserrer le piston rotatif à palettes (5) et sur quoi agissent les éléments à ressort (19).

2. Moteur à piston rotatif à palettes selon la revendication 1, **caractérisé en ce** qu'un élément de butée (12) fixe sur le bâti présente, pour former un couple glissant avec l'autre (la seconde) face frontale (26), une surface glissante tournée vers la face frontale (26) ou un palier axial.

3. Moteur à piston rotatif à palettes selon la revendication 1, **caractérisé en ce** que le piston rotatif à palettes (5) est déplaçable axialement et qu'il est prévu, en plus de l'autre (la seconde) face frontale (26) du piston rotatif à palettes (5), un élément de butée (12) du type disque de frein et configuré stationnaire avec une surface de freinage, élément de butée qui forme un second couple frottant avec l'autre face frontale (26).

4. Moteur à piston rotatif à palettes selon la revendication 1, 2 ou 3, **caractérisé en ce** que l'élément de freinage (28) peut être appuyé, par l'effet d'une force de freinage, contre la surface de freinage (27) de la première face frontale (25) du piston rotatif à palettes (5).

5. Moteur à piston rotatif à palettes selon l'une ou plusieurs des revendications 1, 3 ou 4, **caractérisé en ce** qu'à la place de l'élément de butée (12) il est prévu un autre élément de freinage qui est déplaçable axialement et qui est une partie d'un autre dispositif de freinage et qui peut être appyué, par l'effet d'une force de freinage, contre la surface de freinage de la seconde face frontale (26) du piston rotatif à palettes (5).

6. Moteur à piston rotatif à palettes selon l'une ou plusieurs des revendications 1, 3 ou 4, **caractérisé en ce** que l'élément de freinage (28) se desserre de la première face frontale (25) au moins partiellement pendant le processus de démarrage du moteur à piston rotatif à palettes (1) par l'effet de la substance sous pression amenée au piston rotatif à palettes (5) si bien qu'il se forme une fente entre l'élément de freinage (28) et la première face frontale (25) et que le dispositif de freinage (10) desserre ainsi le piston rotatif à palettes (5) au moins partiellement et que l'élément de freinage (28) est à nouveau amené en contact avec la surface de freinage (27) de la première face frontale (25) à cause de la force de freinage, lorsque l'effet de la substance sous pression diminue.

7. Moteur à piston rotatif à palettes selon la revendication 5 ou 6, caractérisé en ce que l'autre élément de serrage se desserre au moins partiellement pendant le processus de démarrage du moteur à piston rotatif à palettes (1) par l'effet de la substance sous pression amenée au piston rotatif à palettes (5) par la seconde face frontale (26) si bien qu'il se forme une fente entre l'autre élément de freinage et la seconde face frontale (26) et l'autre dispositif de freinage desserre ainsi le piston rotatif à palettes (5) au moins partiellement et que l'autre élément de freinage est à nouveau en amené contact avec la surface de freinage de la seconde face frontale (26) à cause de la force de freinage, lorsque l'effet de la substance sous pression diminue.

8. Moteur à piston rotatif à palettes selon la revendication 1, **caractérisé en ce** que l'élément de freinage (28) du dispositif de freinage (10) est en matériau de garniture de frein.

9. Moteur à piston rotatif à palettes selon la revendication 3, **caractérisé en ce** que l'élément de butée (12) est en matériau de garniture de frein.

10. Moteur à piston rotatif à palettes selon la revendication 1, **caractérisé en ce** que l'élément de freinage (28) est constitué par un corps de base et un disque, le disque étant monté sur le corps de base sur le côté tourné vers le piston rotatif à palettes (5).

11. Moteur à piston rotatif à palettes selon la revendication 10, **caractérisé en ce** que le disque est en matériau de garniture de frein.

12. Moteur à piston rotatif à palettes selon la revendication 10, **caractérisé en ce** que le disque est en métal fritté.

13. Moteur à piston rotatif à palettes selon la revendication 3, **caractérisé en ce** que l'élément de butée (12) est constitué par un corps de base et un disque, le disque étant monté sur le corps de base sur le côté tourné vers le piston rotatif à palettes (5).

14. Moteur à piston rotatif à palettes selon la revendication 13, **caractérisé en ce** que le disque est en matériau de garniture de frein.

15. Moteur à piston rotatif à palettes selon la revendication 13, **caractérisé en ce** que le disque est en métal fritté.

16. Moteur à piston rotatif à palettes selon l'une ou plusieurs des revendications précédentes, **caractérisé en ce** qu'un segment de piston (23), qui est placé dans l'élément de freinage (28), est en relation aussi bien avec des vis de réglage (18) ou une douille filetée qu'avec les éléments à ressort (19), une variation de l'élasticité des éléments à ressort (19) étant provoquée au moyen des vis de réglage ou de la douille filetée (18).

17. Moteur à piston rotatif à palettes selon l'une ou plusieurs des revendications précédentes, **caractérisé en ce** que le piston rotatif à palettes (5) marche dans deux paliers (14, 15), un palier (14) étant placé directement dans l'élément de freinage (28).

18. Moteur à piston rotatif à palettes selon l'une ou plusieurs des revendications précédentes, **caractérisé en ce** que le piston rotatif à palettes (5) marche dans deux paliers (14, 15), un palier (15) du piston rotatif à palettes (5) étant placé directement dans l'élément de butée (12) configuré du type disque ou dans le bâti (4) ou dans l'autre élément de freinage, au cas où l'élément de butée (12) est remplacé par un autre élément de freinage.

19. Moteur à piston rotatif à palettes selon l'une ou plusieurs des revendications précédentes, **caractérisé en ce** que des étanchéités annulaires (16, 17) sont prévues aussi bien pour l'élément de freinage (28) des dispositifs de freinage (10) que pour l'élément de butée (12) en étant placées sur leur périphérie, étanchéités annulaires qui étanchent le compartiment du piston rotatif à palettes (5) par rapport à son environnement pour ce qui est du fluide.

20. Moteur à piston rotatif à palettes selon l'une ou plusieurs des revendications précédentes, **caractérisé en ce** qu'une chemise de cylindre (22), qui est reliée au bâti (4), entoure le piston rotatif à palettes (5).

21. Moteur à piston rotatif à palettes selon l'une ou plusieurs des revendications précédentes, **caractérisé en ce** qu'une forure cylindrique est configurée dans le bâti (4) pour loger le piston rotatif à palettes (5).

22. Moteur à piston rotatif à palettes selon l'une ou plusieurs des revendications précédentes, **caractérisé en ce** que le moteur à piston rotatif à palettes (1) peut fonctionner hydrauliquement.

23. Moteur à piston rotatif à palettes selon l'une ou plusieurs des revendications précédentes, **caractérisé en ce** que le moteur à piston rotatif à palettes (1) peut fonctionner pneumatiquement.

24. Moteur à piston rotatif à palettes selon l'une ou plusieurs des revendications précédentes, **caractérisé en ce** qu'un moteur à engrenages est prévu à la place du moteur à piston rotatif à palettes.
